# EUROPÄISCHE PATENTANMELDUNG

(11) **EP 0 525 574 A2**
(43) Veröffentlichungstag der Anmeldung: **03.02.1993**
(21) Anmeldenummer: 92112391.5
(22) Anmeldetag: 20.07.1992
(51) Int. Cl.: B62D 5/04, B62D 7/15

(54) **System zur Ansteuerung sicherheitsrelevanter Systeme**

(30) Priorität: 27.07.1991 DE 4124987
(71) Anmelder: ROBERT BOSCH GMBH, 70442 Stuttgart (DE)
(72) Erfinder: Weiss, Eberhard, Dipl.-Ing. (FH), W-7254 Hemmingen (DE); Schauer, Karl-Heinz, W-7143 Vaihingen/Enz-Ensingen (DE); Meder, Klaus, Dipl.-Ing., W-7257 Ditzingen (DE); Grossmann, Dieter, W-7140 Ludwigsburg (DE)

(57) **Zusammenfassung**

5 Bei dem erfindungsgemäßen System werden die Stellglieder sicherheitsrelevanter Systeme durch Signale getätigt, die in wenigstens zwei Rechnereinheiten bzw. Rechnerkanälen gebildet werden. Jede Rechnereinheit bzw. jeder Rechnerkanal wird durch eine Überwachungseinrichtung überwacht. Ansteuerungen der Stellglieder von einer der Rechnereinheiten bzw. Rechnerkanäle werden nur dann getätigt, wenn die zu der Rechnereinheit bzw. zu dem Rechnerkanal zugehörige Überwachungseinrichtung eine fehlerfreie Funktion der Rechnereinheit bzw. des Rechnerkanals feststellt. Erfindungsgemäß kann jede der Überwachungseinrichtungen unabhängig von den Überwachungsergebnissen der weiteren Überwachungseinrichtungen bei Erkennen einer Fehlfunktion der zugehörigen zu überwachenden Rechnereinheit bzw. des zugehörigen zu überwachenden Rechnerkanals die sicherheitsrelevanten Systeme in einen sicheren Zustand bringen. Hierdurch ein hohes Sicherheitsniveau der sicherheitsrelevanten Systeme erreicht, da jede Überwachungseinrichtung die Möglichkeit hat, das System in einen sicheren Zustand überzuführen.

## Beschreibung

### Stand der Technik

Die Erfindung betrifft ein System der Gattung des Hauptanspruchs.

Bei Ansteuerungen von Stellgliedern sicherheitsrelevanter Systeme sind hinsichtlich der Sicherheit hohe Anforderungen zu stellen. Dies betrifft insbesondere sicherheitsrelevante Systeme, deren Stellglieder rechnergesteuert betätigt werden. Solche sicherheitsrelevanten Systeme sind beispielsweise auf dem Gebiet der Kraftfahrzeugtechnik zu finden. Hier sind besonders Systeme als sicherheitsrelevant einzustufen, die in die Längs-und/oder Querdynamik des Fahrzeugs eingreifen. Sicherheitskritische Eingriffe in die Längsdynamik eines Kraftfahrzeugs sind beispielsweise Eingriffe in die Vortriebsregelung (elektrischer Drosselklappensteller) oder Eingriffe bezüglich des Bremsverhaltens (Antiblockiersysteme). Sicherheitsrelevante Systeme, die insbesondere die Querdynamik eines Kraftfahrzeugs beeinflussen, sind beispielsweise Lenksysteme. Insbesondere bei rechnergesteuerten Ansteuerungen von Stellgliedern solcher Lenksysteme sind hohen Sicherheitsanforderungen Genüge zu leisten. Im einzelnen soll hier auf Kraftfahrzeuge eingegangen werden, deren hintere Achse oder Achsen zusätzlich zu denen der Vorderachse lenkbar ausgelegt sind.

Zur Erhöhung der Fahrstabilität bzw. zur Verbesserung der Manövrierbarkeit eines Fahrzeugs kann man von der bisher üblicherweise verwendeten konventionellen Vorderradlenkung übergehen zu einer Hinterachs-Zusatzlenkung. Durch aktive Lenkansteuerungen der Hinterräder bestehen wesentlich mehr Möglichkeiten zur Verbesserung des Verhaltens als bei einer reinen Vorderradlenkung. Durch eine Hinterachs-Zusatzlenkung können das Eigenlenkverhalten und das Ansprechverhalten eines Fahrzeugs in einem großen Bereich modifiziert werden. Im allgemeinen wird die Richtung, in welcher die hinteren Räder gelenkt werden, bei solchen Anordnungen abhängig von der Fahrgeschwindigkeit gewählt. Bei hohen Geschwindigkeiten werden die Hinterräder gleichsinnig mit den Vorderrädern, d. h. in derselben Richtung wie die Vorderräder, gelenkt. Hierdurch reagiert das Fahrzeug schneller auf Richtungsänderungen. Bei sehr niedrigen Geschwindigkeiten werden die Hinterräder gegensinnig, d. h. in entgegengesetzter Richtung zu den Vorderrädern, gelenkt, um den Wendekreis des Fahrzeugs zu reduzieren. So erreicht man, daß mit dem Fahrzeug engere Kurven gefahren werden können, was beispielsweise das Einparken vereinfacht.

Ein solches System wird beispielsweise in der DE-OS 37 38 650 vorgestellt, wobei das Rückstellmoment des Kraftfahrzeugs erhöht wird, wenn eine seitliche Kraft (Seitenwind) auf dieses wirkt.

In der DE-OS 39 26 377 sind verschiedene Ausgestaltungen elektronischer Steuergeräte, insbesondere zur Steuerung von Brennkraftmaschinen, mit besonders hoher Zuverlässigkeit beschrieben. Diese Steuergeräte weisen neben dem Hauptrechner einen Nebenrechner auf, der den Hauptrechner überwacht und bei Ausfall des Hauptrechners Notfunktionen ausübt. Weiterhin sind für jeden Rechner Watch-Dog-Schaltungen vorhanden. Bei diesen Steuergeräten werden durch Plausibilitätsbetrachtungen der Überwachungsergebnisse der Watch-Dog-Schaltungen und des Datenaustausches der beiden Rechner untereinander Ansteuerungen von Stellgliedern getätigt.

In der DE-OS 38 16 254 wird eine elektronische Steuereinheit zur Lenkung der Hinterräder eines Straßenfahrzeugs vorgestellt. Bei dieser Steuereinheit sind zwei Rechner vorhanden, die sich gegenseitig durch Datenaustausch kontrollieren. Wird eine Fehlfunktion der Rechner festgestellt, so wird ein Lenknotsignal an die Lenkeinrichtungen abgegeben. Bei der hier beschriebenen Steuereinheit sind auch Watch-Dog-Schaltungen integriert, die bestimmte Zwischenergebnisse bzw. Endergebnisse der Auswertungen der Rechner vergleichen. Abhängig von den Vergleichen kann auf die Fehlfunktion der Rechner geschlossen werden.

In der EP-PS 284 606 ist eine Vorrichtung zum Rücksetzen von Rechnereinrichtungen beschrieben. Hierbei wird die Versorgungsspannung für die Recheneinrichtung kontrolliert und bei Spannungseinbrüchen, bei denen der Rechner in einen undefinierten Zustand gelangen kann, werden Rücksetzimpulse an den Rechner gegeben. Hierbei ist dem Mikroprozessor ein Überwachungssystem (Watch-Dog-Schaltung) zugeordnet, welches die ordnungsgemäße Funktion des Mikroprozessors überwacht und ein Rücksetzimpuls den Rechnereinheiten dann zuführt, wenn die Watch-Dog-Schaltung ein irreguläres Verhalten feststellt.

Aufgabe der vorliegenden Erfindung ist es, ein System zur Ansteuerung von Stellgliedern sicherheitsrelevanter Systeme zu optimieren.

### Vorteile der Erfindung

Bei dem erfindungsgemäßen System werden die Stellglieder sicherheitsrelevanter Systeme durch Signale getätigt, die in wenigstens zwei Rechnereinheiten bzw. Rechnerkanälen gebildet werden. Jede Rechnereinheit bzw. jeder Rechnerkanal wird durch eine Überwachungseinrichtung überwacht. Ansteuerungen der Stellglieder von einer der Rechnereinheiten bzw. einem der Rechnerkanäle werden nur dann getätigt, wenn die zu der Rechnereinheit bzw. zu dem Rechnerkanal zugehörige Überwachungseinrichtung eine fehlerfreie Funktion der Rechnereinheit bzw. des Rechnerkanals feststellt. Erfindungsgemäß kann jede der Überwachungseinrichtungen unabhängig von den Überwachungsergebnissen der weiteren Überwachungseinrichtungen bei Erkennen einer Fehlfunktion der zugehörigen zu überwachenden Rechnereinheit bzw. des zugehörigen zu überwachenden Rechnerkanals die sicherheitsrelevanten Systeme in einen sicheren Zustand bringen. Hierdurch wird ein hohes Sicherheitsniveau der sicherheitsrelevanten Systeme erreicht, da jede Überwachungseinrichtung die Möglichkeit hat, das System in einen sicheren Zustand überzuführen.

Erfindungsgemäß sind die Rechnereinheiten bzw. Rechnerkanäle durch die jeweiligen Überwachungseinrichtungen mit den Stellgliedern der sicherheitsrelevanten Systeme gekoppelt. Im Falle einer Fehlfunktion einer der Rechnereinheiten bzw. Rechnerkanäle werden keine Ansteuerungssignale von der fehlerhaft arbeitenden Rechnereinheit bzw. von dem fehlerhaft arbeitenden Rechnerkanal den Stellgliedern zugeführt. Darüber hinaus führt das Erkennen einer Fehlfunktion einer der Rechnereinheiten bzw. Rechnerkanäle dazu, daß die Stellglieder derart betätigt werden, daß das sicherheitsrelevante System einen sicheren Zustand einnimmt. Die Sicherheit des sicherheitsrelevanten Systems hängt also erfindungsgemäß von Einheiten (Überwachungseinrichtungen) ab, die niedrigere Komplexität als die zu überwachenden Rechnereinheiten bzw. Rechnerkanäle aufweisen. Aufgrund dieser niedrigeren Komplexität haben die Überwachungseinrichtungen somit auch einfachere Fehlerbilder.

Bei einer besonders vorteilhaften Ausgestaltung des erfindungsgemäßen Systems weisen die Rechnereinheiten bzw. Rechnerkanäle und die Überwachungseinrichtungen gemeinsame Mittel zur Spannungsversorgung auf. Während die Überwachungseinrichtungen innerhalb eines ersten Spannungsintervalls (ca. 2 Volt bis ca. 40 Volt) bestimmungsgemäß arbeiten, liegt der Arbeitsbereich der Rechnereinheiten bzw. Rechnerkanäle innerhalb eines zweiten Spannungsintervalls (ca. 4 Volt bis ca. 6 Volt). Umfaßt nun das erste Spannungsintervall das zweite, so ist ein definiertes Verhalten des sicherheitsrelevanten Systems auch in Bereichen möglich, in denen die Rechnereinheiten bzw. die Rechnerkanäle nicht mehr definiert arbeiten. Erst durch die Zuordnung einer Überwachungseinrichtung zu jeder Rechnereinheit bzw. zu jedem Rechnerkanal und der obenbeschriebenen Wahl der Arbeitsspannungsintervalle ist es möglich, die Rechnereinheiten bzw. die Rechnerkanäle mit nur einer Versorgungsspannung zu versorgen. Dies wirkt sich vorteilhaft auf die Leistungsführung, das Referenzspannungskonzept und das ratiometrische Messen analoger Größen aus.

Die unabhängige Überwachung der Rechnereinheiten bzw. der Rechnerkanäle ermöglicht eine Kopplung der Rechnereinheiten bzw. der Rechnerkanäle durch Datenaustauschleitungen (Dual-Port-RAM).

Es ist vorteilhaft, die Überwachungseinrichtungen mit Mitteln zur Durchführung eines Power-On-Resets auszustatten, die, beispielsweise über eine externe Kapazität einstellbar, die Einschaltvorgänge der Rechnereinheiten bzw. der Rechnerkanäle verzögernd tätigen. Weiterhin können Mittel vorgesehen sein, die die Spannungsversorgung der Rechnereinheiten bzw. der Rechnerkanäle derart überwachen, indem sie beispielsweise erfassen, ob die Versorgungsspannung der Rechnereinheiten bzw. der Rechnerkanäle innerhalb des zulässigen Arbeitsspannungsintervalls liegt. Daneben können Mittel vorgesehen sein, die im Falle eines bestimmungsgemäßen Betriebs der Rechnereinheiten bzw. der Rechnerkanäle Signale [Watch-Dog-Triggersignale (WD-Trigger)] erhalten, die eine bestimmte Beschaffenheit aufweisen. Im Falle einer Abweichung dieser Signale von der bestimmten wählbaren Beschaffenheit ist von einer Fehlfunktion der zu überwachenden Rechnereinheit bzw. der zu überwachenden Rechnerkanäle auszugehen.

Wird eine Fehlfunktion einer der Rechnereinheiten bzw. eines Rechnerkanals festgestellt, so löst die Überwachungseinrichtung einen dynamischen Reset aus, der die jeweilige Rechnereinheit bzw. den jeweiligen Rechnerkanal zurücksetzt. Darüber hinaus werden die entsprechenden anzusteuernden Endstufen durch einen statischen Reset verriegelt.

Vorteilhaft ist es, die einzelnen Funktionen der Überwachungsreinrichtungen testbar auszulegen. Die Funktionen der Überwachungseinrichtungen können dann bei Beginn und/oder während des Betriebs des sicherheitsrelevanten Systems programmgemäß getestet werden.

Bei den sicherheitsrelevanten Systemen handelt es sich insbesondere um Hinterachslenksysteme. Die von den Rechnereinheiten bzw. den Rechnerkanälen anzusteuernden Stellglieder sind in diesem Falle insbesondere hydraulische Schalt-und/oder Regelventile. Im Falle einer Erkennung einer Fehlfunktion der Rechnereinheiten bzw. der Rechnerkanäle durch die Überwachungseinrichtungen wird das zu überwachende hydraulische Hinterachslenksystem drucklos geschaltet. Dadurch kann erreicht werden, beispielsweise durch den Abbau des Ansteuerdrucks einer hydromechanischen Bremse, daß der Lenkwinkel der Räder der Hinterachse festgehalten werden.

Weitere vorteilhafte Ausgestaltungen des erfindungsgemäßen Systems sind in den Unteransprüchen gekennzeichnet.

Das erfindungsgemäße System wird im folgenden anhand des in den Zeichnungen dargestellten Ausführungsbeispiels erläutert.

### Zeichnungen

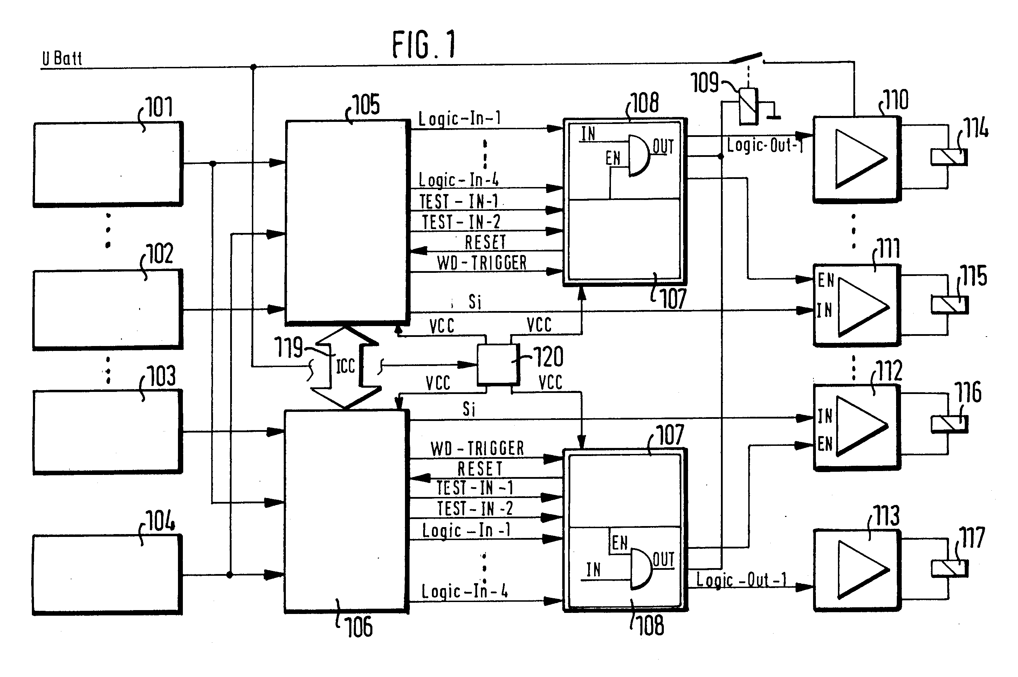

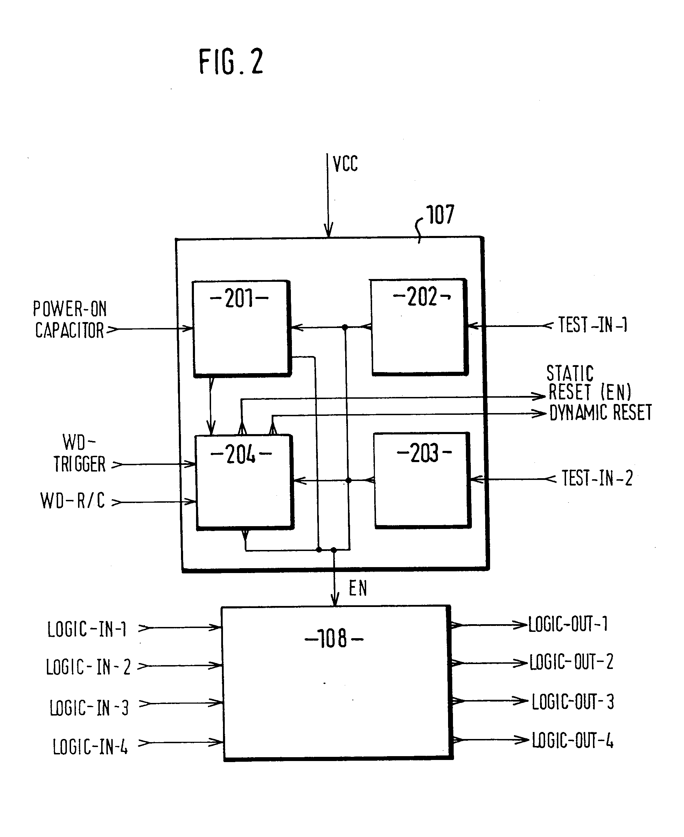

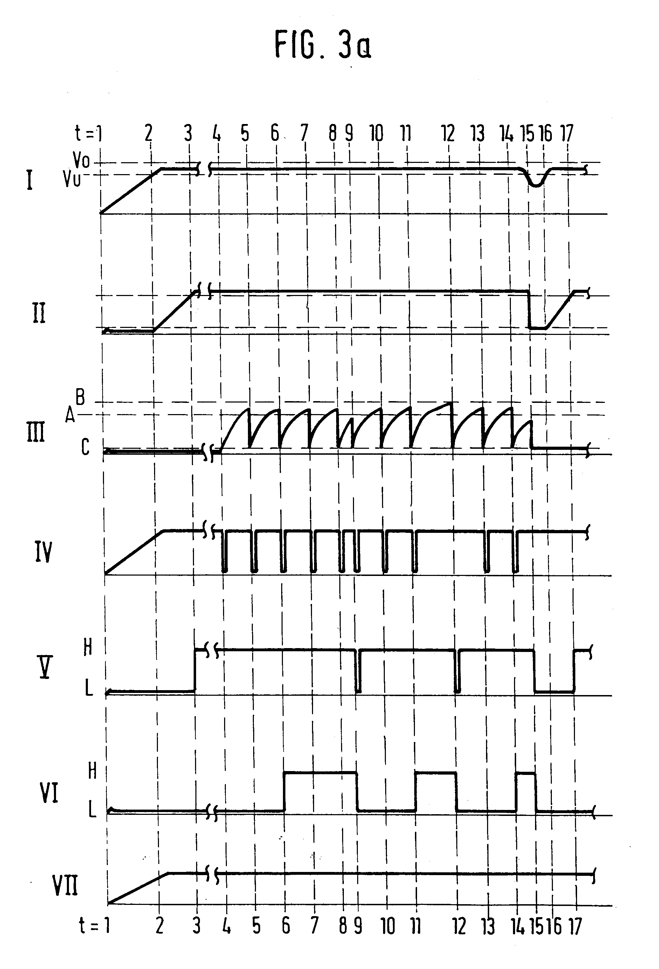

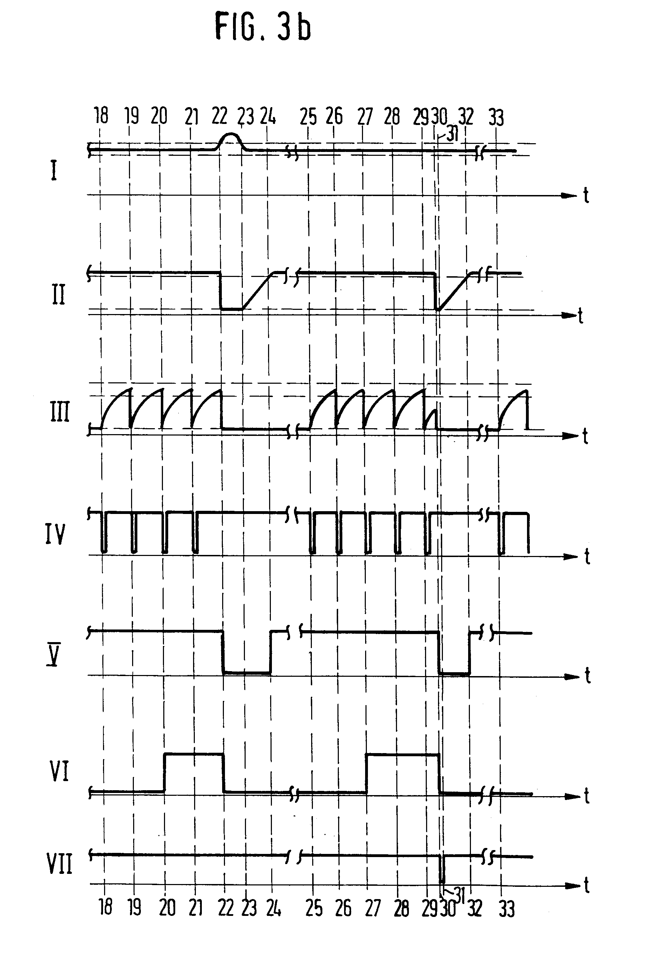

Die Figuren 1 und 2 zeigen Blockschaltbilder eines Ausführungsbeispiels des erfindungsgemäßen Systems. In der Figur 3 sind die zugehörigen Signalverläufe zu sehen.

### Ausführungsbeispiel

Die Figur 1 zeigt mit den Positionen 101, 102, 103 und 104 verschiedene Sensoren in redundanter oder nicht redundanter Ausführung. Mit den Positionen 105 und 106 sind Rechnereinheiten bzw. Rechnerkanäle markiert. Die Position 119 steht für fünfte Mittel zum Datenaustausch, während mit der Position 120 sechste Mittel zur Spannungsversorgung gekennzeichnet sind. Mit der Position 107 sind Überwachungseinrichtungen bezeichnet. Die Position 108 stellt Treibermittel und die Position 109 ein Abschaltrelais dar. Mit den Positionen 110, 111, 112 und 113 sind Endstufen für die Schalt- bzw. Regelventile 114, 115, 116 und 117 zu sehen.

In der Figur 1 ist die Struktur eines sicherheitsrelevanten Systems am Beispiel einer Hinterachslenkung dargestellt. Zur Ansteuerung der Schalt- bzw. Regelventile der hier betrachteten hydraulischen Hinterachslenkung werden Signale der Sensoren 101, 102, 103 und 104 in den Rechnereinheiten bzw. Rechnerkanälen 105 und 106 verarbeitet. Die Sensoren erfassen beispielsweise das vom Fahrer aufgebrachte Lenkradmoment, den Lenkradwinkel, den Lenkwinkel der lenkbaren Räder, die Temperatur des Hydrauliköls, den Beladungszustand des Fahrzeugs, die Fahrzeuggeschwindigkeit und/oder die Querbeschleunigung des Fahrzeugs. Die Sensoren können dabei redundant oder nicht redundant ausgelegt sein. Nicht redundante Sensoren sind in der Figur 1 mit der Position 101 und 104 gekennzeichnet, während redundant ausgelegte Sensoren mit den Bezugszeichen 102 und 103 gekennzeichnet sind. Vorteilhafterweise werden die Signale der nicht redundanten Sensoren beiden Rechnereinheiten bzw. Rechnerkanälen 105 und 106 zugeführt. Die Signale der redundant ausgelegten Sensoren 102 und 103 werden in verschiedenen Rechnereinheiten bzw. Rechnerkanälen zugeleitet. Die Rechnereinheiten bzw. Rechnerkanäle 105 und 106 können Teile eines Gesamtrechners sein (Rechnerkanäle) oder zwei separate Rechner (Rechnereinheiten). In den Rechnereinheiten bzw. Rechnerkanälen 105 und 106 werden die Sensorsignale gemäß der verwendeten Steuer- bzw. Regelstrategie bearbeitet. Im besonderen kann bei einem Hinterachslenksystem vorgesehen sein, daß durch eine gezielte Betätigung der lenkbar ausgelegten Räder der Hinterachse abhängig von den sensorisch ermittelten fahrdynamischen Daten ein Stabilitätsgewinn und bessere Kurshaltung, beispielsweise bei Kurvenfahrten, Fahrbahnwechsel, Seitenwind, bei mittleren bis hohen Geschwindigkeiten erreicht werden kann. Bei niedrigen Geschwindigkeiten, beispielsweise beim Einparken im Stadtverkehr, kann durch eine gezielte Beaufschlagung der Hinterachslenksysteme die Fahrzeugmanövrierbarkeit verbessert werden.

Ausgangsseitig der Rechnereinheiten bzw. Rechnerkanäle 105 und 106 liegen die Ansteuersignale zur Ansteuerung der Stellglieder an. Diese Ansteuerung wird im allgemeinen durch eine Ansteuerung der zu den Stellgliedern gehörenden Endstufen durch die Rechnersignale getätigt. Je nach Ausgestaltung des Stellgliedes liegen also ausgangsseitig der Rechnereinheiten bzw. Rechnerkanäle 105 und 106 logische Signale (Logic-In-1, Logic-In-2 ...) oder analoge Signale Si an. Die logischen Signale dienen zur Ansteuerung der Schaltventile 114 und 117, während die analogen Signale die Funktion der Regelventile 115 und 116 steuern. Die Schalt- und Regelventile 114 bis 117 können beispielsweise als Magnetventile ausgelegt sein, wobei die Regelventile 115 und 116 den Lenkwinkel der lenkbaren Räder bestimmen und die Schaltventile 114 und 117 ein redundant ausgelegtes Abschalten der gesamten Hinterachslenkung bewirken. Dies kann dadurch geschehen, daß die Schaltventile 114 und 117 das hydraulische Hinterachslenksystem innerhalb kurzer Zeit drucklos schalten. Bei Abbau des Ansteuerdrucks einer hydromechanisch wirkenden Bremse und/oder von Zylinder-Sperrventilen wird die Kolbenstange des hydraulischen Hinterachslenksystems blockiert. Dies bewirkt, daß der gerade eingestellte Lenkwinkel der Hinterräder unverändert beibehalten wird. Das gesamte Lenksystem des Fahrzeugs befindet sich dann in einem definierten und sicheren Zustand.

Es kann auch vorgesehen sein, daß durch die Betätigung der Schalt- und/oder Regelventile eine andere, beispielsweise neutrale, Lenkstellung der Hinterräder eingenommen wird und darauffolgend das System in dieser Stellung blockiert wird.

Die logischen Ausgangssignale (Logic-In-1, Logic-In-2 ...) der Rechnereinheiten bzw. der Rechnerkanäle 105 und 106 passieren vor Erreichen der Endstufen 110 und 113 die Treiberstufen 108. Die Treiberstufen 108 sind mit Schaltungen ausgestattet, die abhängig von Signalen, die den Treiberstufen von den Überwachungsmitteln 107 zugeführt werden, die logischen Signale (Logic-In-1 ...) entweder unverändert passieren lassen oder derart verändern, daß die Endstufen verriegelt werden.

Den Überwachungseinrichtungen 107 werden von den Rechnereinheiten bzw. von den Rechnerkanälen 105 und 106 verschiedene Signale zugeführt. Andererseits werden den Rechnereinheiten bzw. den Rechnerkanälen 105 und 106 Reset-Signale von den Überwachungseinrichtungen 107 zugeführt. Der Datenaustausch zwischen den Rechnereinheiten 105 und 106 den Überwachungseinrichtungen 107 und den Treiberstufen 108 wird anhand der Figur 2 und 3 näher erläutert.

In der Figur 1 verfügen die Rechnereinheiten bzw. die Rechnerkanäle 105, 106 und die Überwachungseinrichtungen über eine gemeinsame Spannungsversorgung. Hierzu wird die Batteriespannung UBatt den sechsten Mitteln 120 zugeführt, die die gemeinsame Spannungsversorgung der Rechnereinheiten bzw. der Rechnerkanäle 105, 106 und der Überwachungseinrichtungen 107 darstellen und die gemeinsame Versorgungsspannung Vcc liefern. Weiterhin werden die Endstufen 110 bis 113 der Schalt- bzw. Regelventile 114 bis 117 durch die Spannung UBatt über das Abschaltrelais 109 versorgt. Das Abschaltrelais 109 kann von den Treiberstufen 108 bzw. durch die Überwachungseinrichtungen 107 betätigt werden.

Anhand der Figur 2 soll im folgenden die Funktionsweise der Überwachungseinrichtungen 107 und der Treiberstufen 108 erläutert werden. Hierzu sind mit der Position 201 erste Mittel zur Durchführung eines Power-On-Resets dargestellt. Zweite und dritte Mittel zur Überwachung der Spannungsversorgung der Rechnereinheiten bzw. der Rechnerkanäle 105 und 106 sind mit den Bezugszeichen 202 und 203 markiert. Die Position 204 kennzeichnet vierte Mittel, die als Watch-Dog-Schaltung ausgebildet sind.

Im folgenden soll anhand der Signalverläufe, die in der Figur 3 abgebildet sind, die Funktionsweisen der einzelnen Funktionseinheiten der Überwachungseinrichtungen 107 erläutert werden. Hierzu sind in der Figur 3 verschiedene Signalverläufe über der Zeit t zu sehen.

Durch die ersten Mittel 201 zur Durchführung eines Power-On-Resets werden die Einschaltvorgänge der Überwachungseinrichtungen 107, beispielsweise über eine externe Kapazität einstellbar, verzögernd getätigt. Dieses Verhalten ist in der Figur 3 in den Signalzügen I und 11 innerhalb des Zeitintervalls t = 1 bis t = 3 zu sehen. Der Signalzug I zeigt das Signal Vcc, das die Spannungsversorgung der Überwachungsmittel 107 bzw. der Rechnereinheiten bzw. Rechnerkanäle 105 und 106 repräsentiert. Im Bereich des Zeitintervalls t = 1 bis t = 3 wächst die Versorgungsspannung Vcc beim Einschaltvorgang an. Ein Power-On-Kondensator bleibt während dieses Einschaltvorgangs solange entladen, bis die Versorgungsspannung Vcc die untere Spannungsschwelle Vu plus einer Hysterese überschreitet. Der Kondensator wird dann über eine Konstantstromquelle aufgeladen. Erreicht die Ladespannung am Kondensator eine gewisse Schwellspannung, so beendet ein Komparator den Reset und gibt die Überwachungseinrichtung 107 frei. Dieses Verhalten des nicht näher dargestellten Kondensators ist im Signalzug 11 in der Figur 3 innerhalb des Zeitintervalls t = 2 bis t = 3 zu sehen.

Die untere Spannungsschwelle Vu und die obere Spannungsschwelle Vo der Versorgungsspannung Vcc stellt ein zweites Spannungsintervall (ca. 4 Volt bis ca. 6 Volt) dar, indem die Rechnereinheiten bzw. Rechnerkanäle 105 bzw. 106 bestimmungsgemäß, das heißt definiert, arbeiten. Die zweiten und dritten Mittel 202 und 203 dienen zur Überwachung der Spannungsversorgung der Rechnereinheiten bzw. der Rechnerkanäle 105 und 106. Unterschreitet die Versorgungsspannung Vcc die untere Spannungsschwelle Vu, wie im Bereich des Zeitintervalls t = 14 bis t = 17, so wird dies in den dritten Mitteln 203 festgestellt. Ebenso wird ein Überschreiten der oberen Spannungsschwelle Vo, wie im Bereich des Zeitintervalls t = 21 bis t = 24, in den zweiten Mitteln 202 erfaßt. Nach Unterschreiten der unteren Spannungsschwelle Vu oder dem Überschreiten der oberen Spannungsschwelle Vo löst die Überwachungseinrichtung 107 einen dynamischen Reset aus, der die Rechnereinheiten bzw. die Rechnerkanäle zurücksetzt. Ebenso wird ein statischer Reset veranlaßt, der die entsprechenden Endstufen der Stellglieder beispielsweise mittels der Treiberstufen 108 verriegelt. Das Auslösen des dynamischen Resets als Folge des Unter- bzw. Überschreitens der unteren bzw. oberen Spannungsschwelle ist im Signalverlauf V in der Figur 3 im Bereich des Zeitintervalls t = 14 bis t = 17,5 zu sehen. Unterschreitet die Versorgungsspannung Vcc zum Zeitpunkt t = 15 die untere Spannungsschwelle Vu, so wird der dynamische Resetausgang auf das Level L gesetzt, wodurch die Rechnereinheiten bzw. die Rechnerkanäle 105 und 106 zurückgesetzt werden. Überschreitet die Versorgungsspannung Vcc die untere Spannungsschwelle Vu (Zeitpunkt t = 16), so wird die obenbeschriebene Einschaltprozedur durchgeführt. Das heißt, daß der Power-On-Kondensator zur Zeit t = 16 wie oben beschrieben aufgeladen wird bis die Ladespannung am Kondensator eine bestimmte Schwellspannung erreicht, wodurch die Rechnereinheiten bzw. die Rechnerkanäle 105 und 106 wieder neu gestartet werden. Ebenso wird bei Unterschreitung der unteren Spannungsschwelle Vu zur Zeit t = 15 das im Signalzug VI zu sehende statische Reset-Signal auf das Level L gesetzt. Liegt ausgangsseitig der Überwachungseinrichtungen 107 das statische Resetsignal auf dem Level L, so werden in den Treiberstufen 108 die Ansteuerungen der Endstufen der Stellglieder unterbunden. Auch nach einem Neustart der Rechnereinheiten bzw. der Rechnerkanäle durch das dynamische Resetsignal (Zeitpunkt t = 17) bleiben die Endstufen verriegelt. Analoges Verhalten ist im Zeitintervall t = 21 bis t = 24 zu sehen, indem die Versorgungsspannung Vcc die obere Spannungsschwelle Vo überschreitet. Auch in diesem Falle werden die Rechnereinheiten bzw. die Rechnerkanäle durch einen Power-On-Reset bzw. durch ein dynamisches Reset-Signal neu gestartet, während die Endstufen verriegelt bleiben.

Durch die Funktionsweise der zweiten und dritten Mitteln 202 und 203 wird sichergestellt, daß keine Endstufenansteuerungen durch die Rechnereinheit bzw. durch den Rechnerkanal stattfindet, die bzw. der aufgrund eines Unter- bzw. Überschreitens der Versorgungsspannung Vcc nicht definiert arbeitet. Wie in der Figur 2 zu sehen ist, geben also die zweiten Mittel 202 und 203 bei Über- bzw. Unterschreiten der Spannungsschwellen Signale an die ersten Mittel 202 (Power-On-Reset), die wiederum die vierten Mittel 204 derart ansteuern, daß ein dynamischer bzw. statischer Reset ausgelöst wird.

Die Funktionen der zweiten und dritten Mittel 202 und 203 sind testbar ausgelegt. Hierzu können die zweiten und dritten Mittel 202 und 203 beim Beginn und/oder während des programmgemäßen Betriebs der sicherheitsrelevanten Systeme durch Testimpulse (Test-In 1, Test-In 2) beaufschlagt werden, wobei Testzyklen während des programmgemäßen Betriebs der sicherheitsrelevanten Systeme nur schwierig zu realisieren sind, da das System relativ lange aussetzt. Hierdurch wird ein Unter- bzw. Überschreiten der Versorgungsspannung Vcc unter die untere Schwelle Vu bzw. über die obere Schwelle Vo simmuliert. Solch eine Testphase ist im Signalzug VI im Zeitintervall t = 30 bis t = 31 zu sehen. Programmgemäß wird, wie oben beschrieben, ein dynamischer und ein statischer Reset ausgelöst, während die Power-On-Schaltung (erste Mittel 201) einen Einschaltvorgang bewirken. Da die Rechnereinheiten bzw. die Rechnerkanäle während eines solchen Tests resetet werden, muß beispielsweise durch einen nichtflüchtigen Speicher sichergestellt sein, daß nach dem Resetvorgang in den Rechnereinheiten bzw. Rechnerkanälen gespeichert ist, ob der abgeschlossene Resetvorgang absichtlich, das heißt testhalber, durchgeführt wurde oder ob ein wirklicher Fehler vorliegt. Ebenso muß beispielsweise in einen nichtflüchtigen Speicher der Rechnereinheiten bzw. Rechnerkanäle gespeichert sein, welcher Test (Über- oder Unterschreiten der Spannungsschwellen) zu einem Reset geführt hat.

Das obenbeschriebene Testverfahren wird also von den Rechnereinheiten bzw. den Rechnerkanälen 105 und 106 ausgehend durchgeführt, wobei die Funktionen der Überwachungseinheiten 107 getestet werden.

Die vierten Mittel 204 sind als Watch-Dog-Schaltungen ausgebildet, die den Betrieb der Rechnereinheiten bzw. der Rechnerkanäle 105 und 106 überwachen. Hierzu werden den vierten Mitteln 204 von den zu überwachenden Rechnereinheiten bzw. Rechnerkanälen 105 und 106 erste Signale zugeführt, sogenannte Watch-Dog-Trigger-Signale (WD-Trigger). Diese ersten Signale sind in der Figur 3 im Signalzug IV zu sehen. Bei bestimmungsgemäßem Betrieb der Rechnereinheiten bzw. Rechnerkanäle 105 und 106 liefern die Rechnereinheiten bzw. Rechnerkanäle äquidistante gleichartige Signale. Dies ist in der Figur 3 im Signalzug IV im Zeitintervall t = 4 bis t = 8, bei t = 18 bis t = 21 und im Zeitintervall t = 25 bis t = 29 zu sehen. Weichen die ersten Signale von dieser obenbeschriebenen bestimmten wählbaren Beschaffenheit ab, so wird in den Mitteln 204 die nicht bestimmungsgemäße Arbeitsweise der zu überwachenden Rechnereinheiten bzw. Rechnerkanäle erfaßt. Diese Erfassung kann wie folgt beschrieben getätigt werden.

Durch die erste negative Flanke (Zeitpunkt t = 4) des WD-Trigger-Signals wird ein R/C-Glied "scharf gemacht", das heißt daß die Kapazität C über den Widerstand R geladen wird. Die das R/C-Glied durchlaufenden WD-Trigger-Signale sind in der Figur 3 im Signalzug 111 zu sehen. Der Kondensator C des R/C-Gliedes wird mit der negativen Flanke des folgenden WD-Trigger-Impulses (Zeitpunkt t = 5) entladen. Bei bestimmungsgemä- ßer Funktion der Rechnereinheiten bzw. Rechnerkanäle 105 und 106 (beispielsweise Zeitintervall t = 4 bis t = 8) liegen ausgangsseitig des R/C-Gliedes die im Signalzug 111 (Zeitintervall t = 4 bis t = 8) zu sehenden Watch-Dog R/C-Signals (WD-R/C-Signals) an. Bei bestimmungsgemäßen, das heißt fehlerfreiem Betrieb der Rechnereinheiten bzw. Rechnerkanäle 105 und 106 liegen die WD-R/C-Signale (Signalzug 111) vor dem Entladen des Kondensators C innerhalb eines Spannungsfensters, das durch eine untere Schwelle A und einer oberen Schwelle B gekennzeichnet ist. Sollte nun das WD-Trigger-Signal (Signalzug IV) zu kurz sein, so wird die untere Schwelle A nicht erreicht. Dies ist in dem Zeitintervall t = 8 und t = 9 in den Signalzügen 111 bzw. IV zu sehen. Ein solches Nichterreichen der unteren Schwelle A wird als Fehlerereignis gespeichert. Sollte die WD-Trigger-Zeit zu lang sein (Zeitintervall t = 11 bis Zeitintervall t = 13), so wird das Fehlerereignis wiederum gespeichert und der Kondensator C wird bei Erreichen der Schwelle B entladen. Nach Erreichen der Entladeschwelle C beginnt der Ladevorgang von neuem. Sind die WD-Trigger-Impulse (Signalzug IV) zu früh (Zeitpunkt t = 9) bzw. zu spät (Zeitpunkt t = 13), so ist davon auszugehen, daß die Rechnereinheit bzw. der Rechnerkanal, der die WD-Trigger-Impulse sendet, nicht ordnungsgemäß arbeitet. In den vierten Mitteln 204 werden in diesen Fällen die Fehlfunktionen dadurch erkannt, daß die WD-Trigger-Signale nicht in das vorgesehene Spannungsfenster fallen. In diesen Fällen werden, beispielsweise zu den Zeitpunkten t = 9 bzw. t = 12, dynamische und statische Resets ausgelöst. Während das dynamische Resetsignal ein Rücksetzen der Rechnereinrichtungen bzw. der Rechnerkanäle bewirkt, bleiben die anzusteuernden Endstufen durch das statische Resetsignal solange verriegelt, bis der zweite WD-Trigger-Impuls (zur Zeit t = 11) ordnungsgemäßen von den Rechnereinheiten bzw. den Rechnerkanälen geliefert wird. Eine ähnliche Prozedur geschieht beim Einschalten der Überwachungseinrichtung. Ab einer Spannung, die so niedrig ist, daß die anzusteuernden Endstufen noch nicht betätigt werden, liegen die statischen ResetSignale auf einem definierten Pegel und verriegeln die Endstufen (Zeitpunkt t = 4 bis t = 6). Nach dem Eingang des ersten WD-Trigger-Impulses (Signalzug IV), dem obenbeschriebenen "Scharfmacher", werden die Endstufen erst bei ordnungsgemäßem Eingang des zweiten Trigger-impulses (Zeitpunkt t = 6) durch Anheben des statischen Resetsignals auf das Level H entriegelt.

Die Funktion der vierten Mittel 204 sind dadurch überprüfbar, daß die Rechnereinrichtungen bzw. die Rechnerkanäle die Watch-Dog-Schaltung (vierte Mittel 204) programmgemäß auslösen, indem sie programmgemäß "falsche" und/oder keine Triggerimpulse an die vierten Mittel 204 liefern. In den Rechnereinrichtungen bzw. Rechnerkanälen kann nun die Zeit erfaßt werden, die von einem solchen programmgemäß getätigten Triggerimpuls bis zum dynamischen Reset vergeht. Durch Vergleiche dieser Zeiten mit vorgegebenen Sollzeiten kann auf die ordnungsgemäße Funktionsweise der vierten Mittel 204 geschlossen werden. Auch bei diesem Test wird der Rechner durch das dynamische Resetsignal zurückgesetzt. Um zu unterscheiden, ob das Zurücksetzen absichtlich testhalber durchgeführt wurde oder ob ein wirklicher Fehler vorliegt, muß in den Rechnereinheiten bzw. den Rechnerkanälen der Zeitpunkt und die Art des Tests in nichtflüchtigen Speichern abgelegt werden.

Als weitere vorteilhafte Ausgestaltung können die testhalber getätigten "falschen" Triggerimpulse zeitlich derart gewählt werden, daß das im Signalzug 111 (Fig.3) dargestellte Spannungsfenster (untere Schwelle A und obere Schwelle B) überprüft wird. So kann beispielsweise die untere Schwelle A dadurch überprüft werden, indem von den Rechnereinheiten bzw. den Rechnerkanälen 105 und 106 Watch-Dog-Trigger-Signale testhalber eine bestimmte Zeit delta t "zu früh" an die Überwachungseinrichtung 107 übermittelt werden. Die Zeit delta t kann nun von kleinen Werte beginnend soweit vergrößert werden, bis durch ein Unterschreiten der unteren Schwelle A ein dynamischer Reset ausgelöst wird. Wird ein solcher dynamischer Reset ausgelöst, so kann aus der zugehörigen Zeit delta t die zeitliche Lage der unteren Schwelle A bestimmt werden. Eine Überprüfung der oberen Schwelle B erfolgt analog.

Die Funktionsweise der Treiberstufen 108 soll im folgenden aufgezeigt werden.

Von den Überwachungsreinrichtungen 107 werden den Treiberstufen 108 statische Resetsignale zugeführt. Die Treiberstufen 108 sind als UND-Gatter mit open-collector-Ausgängen ausgebildet. Wie in der Darstellung der Treiberstufen 108 in der Figur 1 angedeutet, liegt an jeweils einem Eingang der UND-Gatter das statische Resetsignal EN an. Die zweiten Eingänge der UND-Gatter sind mit den Ansteuersignalen der Schaltventile Logic-In-1, Logic-In-2 usw. verbunden. Ermitteln die Überwachungseinrichtungen 107 eine ordnungsgemäße Funktion der Rechnereinheiten bzw. Rechnerkanäle 105 und 106, so liegt das statische Resetsignal (Signalzug VI in der Figur 3) auf dem Level H. In diesem Falle werden die Eingangssignale Logic-In-1 usw. der Treiberstufen 108 unbeeinflußt als Ausgangssignale an die Endstufen durchgeleitet. Bei der Erfassung eines nicht ordnungsgemäßen Arbeitens der Rechnereinheiten bzw. Rechnerkanäle 105 und 106 liefern die Überwachungseinrichtungen 107 das statische Resetsignal (Signalzug VI in der Figur 3) mit dem Level L. In diesem Falle werden die Eingangssignale der Treiberstufen 108 Logic-In-1 usw. derart beeinflußt, daß die Ausgangssignale der Treiberstufen 108 Logic-Out-1 usw. eine Verriegelung der Endstufen bewirken. Dies kann bedeuten, daß im Falle einer hydraulischen Hinterachslenkung die Schaltventile 114 oder 117 derart geschaltet werden, daß das System, wie oben beschrieben, drucklos wird und einen sicheren Betriebszustand einnimmt.

Eine vorteilhafte Ausgestaltung des erfindungsgemäßen Systems besteht darin, daß zur gegenseitigen Funktionskontrolle der Rechnereinheiten bzw. der Rechnerkanäle 105 und 106 fünfte Mittel 119 zum Datenaustausch zwischen den einzelnen Rechnereinheiten bzw. den einzelnen Rechnerkanälen 105 und 106 vorgesehen sind. Hierzu können die Rechnereinheiten bzw. Rechnerkanäle 105 und 106 mittels eines gemeinsamen elektronischen Bauelements zur Kommunikation zwischen den Rechnereinheiten (Inter Controller Communication ICC) verbunden sein, wobei dieses Bauelelement Speicherbereiche aufweist, in denen jede Rechnereinheit bzw. jeder Rechnerkanal 105 und 106 Daten jeweils nur einschreiben oder auslesen kann. Dabei können die Speicherbereiche, in denen die eine Rechnereinheit bzw. der eine Rechnerkanal 105 oder 106 Daten einschreiben kann, von der jeweils anderen Rechnereinheit bzw. dem jeweils anderen Rechnerkanal (105, 106) nur ausgelesen werden. Da prinzipiell jede Rechnereinheit bzw. jeder Rechnerkanal auf alle Speicherzellen lesen und schreiben kann, obliegt es dem Fachmann, auch andere Speicherorganisationen eines solchen Dual-Port-RAM zu erzeugen.

Das erfindungsgemäße System ist nicht nur auf die Ansteuerung von Stellgliedern einer Hinterachslenkung beschränkt, sondern ebenso anwendbar auf die Ansteuerung von Stellgliedern anderer sicherheitsrelevanter Systeme wie beispielsweise elektrische Drosselklappensteller, Vorderradlenksysteme, Antiblockiersysteme, Fahrwerkregelungssysteme und Brennkraftmaschinensteuerungssysteme.

## Patentansprüche

1. System zur Ansteuerung sicherheitsrelevanter Systeme, insbesondere zur Ansteuerung von Lenksystemen bei Kraft- und Nutzfahrzeugen, mit Stellgliedern zur Betätigung der sicherheitsrelevanten Systeme, wobei die Signale zur Ansteuerung der Stellglieder durch wenigstens zwei Rechnereinheiten bzw. Rechnerkanälen (105, 106) gebildet werden und jeweils einer Rechnereinheit bzw. einem Rechnerkanal (105, 106) eine Überwachungseinrichtung (107) zugeordnet ist, dadurch gekennzeichnet, daß
- Ansteuerungen der Stellglieder von einer der Rechnereinheiten bzw. Rechnerkanäle (105, 106) nur dann getätigt werden, wenn die zu der Rechnereinheit bzw. zu dem Rechnerkanal (105, 106) zugehörige Überwachungseinrichtung (107) eine fehlerfreie Funktion der Rechnereinheit bzw. des Rechnerkanals (105, 106) feststellt und
- jede der Überwachungseinrichtungen (107) unabhängig von den Überwachungsergebnissen der weiteren Überwachungseinrichtungen bei Erkennen einer Fehlfunktion der zugehörigen zu überwachenden Rechnereinheit bzw. des zugehörigen zu überwachenden Rechnerkanals (105, 106) die sicherheitsrelevanten Systeme in einen sicheren Zustand bringt.

2. System nach Anspruch 1, dadurch gekennzeichnet, daß die Rechnereinheiten bzw. Rechnerkanäle (105, 106) und die Überwachungseinrichtungen (107) gemeinsame sechste Mittel (120) zur Spannungsversorgung aufweisen und die Überwachungseinrichtungen (107) innerhalb eines ersten Spannungsintervalls (ca.2V bis ca.40V) bestimmungsgemäß arbeiten und die Rechnereinheiten bzw. Rechnerkanäle (105, 106) innerhalb eines zweiten Spannungsintervalls (ca.4V bis ca.6V) bestimmungsgemäß arbeiten und das zweite Spannungsintervall innerhalb des ersten Spannungsintervalls liegt.

3. System nach wenigstens einem der vorhergehenden Ansprüche, dadurch gekennzeichnet, daß in den Überwachungseinrichtungen (107)
- erste Mittel (201) zur Durchführung eines Power-On-Resets vorgesehen sind, die, beispielsweise über eine externe Kapazität einstellbar, die Einschaltvorgänge der Überwachungseinrichtungen (107) verzögernd tätigen, und/oder
- zweite und dritte Mittel (202, 203) zur Überwachung der Spannungsversorgung der Rechnereinheiten bzw. der Rechnerkanäle (105, 106) vorgesehen sind, die beispielsweise erfassen, ob die Versorgungsspannung der Rechnereinheiten bzw. Rechnerkanäle (105, 106) innerhalb eines zweiten Spannungsintervalls, in dem Rechnereinheiten bzw. Rechnerkanäle (105, 106) bestimmungsgemäß arbeiten, liegt und eine fehlerhafte Funktion der zu überwachenden Rechnereinheiten bzw. Rechnerkanäle (105, 106) feststellt, wenn die Versorgungsspannung einen Wert aufweist, der außerhalb des zweiten Spannungsintervalls ist, und/oder
- vierte Mittel (204) als Watch-Dog Schaltung ausgebildet sind, die im Falle eines bestimmungsgemäßen Betriebs der Rechnereinheiten bzw. Rechnerkanäle (105, 106) erste Signale bestimmter wählbarer Beschaffenheit von den Rechnereinheiten bzw. Rechnerkanälen (105, 106) erhalten und im Falle einer Abweichung der ersten Signale von der bestimmten wählbaren Beschaffenheit auf eine Fehlfunktion der zu überwachenden Rechnereinheiten bzw. Rechnerkanäle (105, 106) schließen.

4. System nach wenigstens einem der vorhergehenden Ansprüche, dadurch gekennzeichnet, daß die Funktion der zweiten und dritten Mittel (202, 203) und/oder der vierten Mittel (204) testbar ausgelegt sind.

5. System nach wenigstens einem der vorhergehenden Ansprüche, dadurch gekennzeichnet, daß die Funktion der zweiten und dritten Mittel (202, 203) und/oder der vierten Mittel (204) beim Beginn und/oder während des programmgemäßen Betriebs der sicherheitsrelevanten Systeme programmgemäß getestet werden.

6. System nach wenigstens einem der vorhergehenden Ansprüche, dadurch gekennzeichnet, daß die von den Rechnereinheiten bzw. Rechnerkanälen (105, 106) anzusteuernden Stellglieder hydraulische Schalt- und/oder Regelventile sind, die insbesondere in einem Hinterachslenksystem verwendet werden.

7. System nach wenigstens einem der vorhergehenden Ansprüche, dadurch gekennzeichnet, daß im Falle einer Erkennung einer Fehlfunktion der Rechnereinheiten bzw. Rechnerkanäle (105, 106) durch die Überwachungseinrichtungen (107) das zu überwachende hydraulische Hinterachslenksystem drucklos geschaltet wird, wodurch, beispielsweise durch den Abbau des Ansteuerdruckes einer hydromechanischen Bremse, ein Festhalten der Lenkwinkel der Räder der Hinterachse erreicht wird.

8. System nach wenigstens einem der vorhergehenden Ansprüche, dadurch gekennzeichnet, daß zur gegenseitigen Funktionskontrolle der Rechnereinheiten bzw. Rechnerkanäle (105, 106) fünfte Mittel (119) zum Datenaustausch zwischen den einzelnen Rechnereinheiten bzw. Rechnerkanälen (105, 106) vorgesehen sind.

9. System nach wenigstens einem der vorhergehenden Ansprüche, dadurch gekennzeichnet, daß die Rechnereinheiten bzw. Rechnerkanäle (105, 106) zum Datenaustausch mittels eines gemeinsamen elektronischen Bauelements (ICC) verbunden sind und dieses Bauelelement (ICC) beispielsweise Speicherbereiche aufweist, in denen jede Rechnereinheit bzw. jeder Rechnerkanal (105, 106) Daten jeweils nur einschreiben oder nur auslesen kann, und die Speicherbereiche, in denen die eine Rechnereinheit bzw. der eine Rechnerkanal (105, 106) Daten einschreiben kann von den anderen Rechnereinheiten bzw. den anderen Rechnerkanälen (105, 106) nur ausgelesen werden können.

10. System nach wenigstens einem der vorhergehenden Ansprüche, dadurch gekennzeichnet, daß die von den Rechnereinheiten bzw. Rechnerkanälen (105, 106) anzusteuernden Stellglieder zu sicherheitsrelevanten Systemen gehören und diese sicherheitsrelevanten Systeme beispielsweise elektrische Drosselklappensteller, Vorderradlenksysteme, Antiblockiersysteme, Fahrwerkregelungssysteme und Brennkraftmaschinensteuerungssysteme sind.
